# EUROPEAN PATENT APPLICATION

(11) **EP 4 796 607 A1**
(43) Date of publication of application: **26.08.2026**
(21) Application number: 24882430.2
(22) Date of filing: 24.10.2024
(51) Int. Cl.: C09D 183/04, B01D 53/22, B01D 69/00, B01D 69/10, B01D 69/12, B01D 71/70, C08J 7/04, C09D 7/63

(54) **FILM-FORMING COMPOSITION, CURED FILM, PRODUCTION METHOD FOR CURED FILM, PRODUCTION METHOD FOR MULTILAYER BODY, AND CO2 SEPARATION METHOD**

(30) Priority: 26.10.2023 JP 2023184201
(71) Applicant: TOKYO OHKA KOGYO CO., LTD., Kawasaki-shi, Kanagawa 211 0012 (JP)
(72) Inventor: SUGAWARA Tsukasa, Kawasaki-shi, Kanagawa 211-0012 (JP)
(74) Representative: Plasseraud IP
(86) International application number: PCT/JP2024/037859
(87) International publication number: WO 2025/089319

(57) **Abstract**

Provided are: a film-forming composition capable of forming a film having a uniform film thickness; a cured film of said film-forming composition; a production method for said cured film; a production method for a multilayer body using said production method for the cured film; and a CO2 separation method using the multilayer body produced via said production method. The film-forming composition includes polydimethylsiloxane, a curing agent, and at least one hydroxamic acid compound or related substance selected from among hydroxamic acids and salts thereof, and the content of the hydroxamic acid compound or related substance is greater than 0 mass% and less than 5 mass% relative to the mass of the polydimethylsiloxane.

## Description

### TECHNICAL FIELD

The present invention relates to a film-forming composition, a cured film, a production method for a cured film, a production method for a multilayer body, and a CO₂ separation method.

### BACKGROUND ART

In order to suppress global warming due to climate change, etc., technology for separating and recovering carbon dioxide (CO₂) using a CO₂ separation film has been developed (for example, Patent Document 1).

### Citation List

### Patent Documents

Patent Document 1: Japanese Unexamined Patent Application Publication No. 2018-15678

### DISCLOSURE OF THE INVENTION

### Problems to be Solved by the Invention

A film-forming composition including polydimethylsiloxane (PDMS), for example, is being used in the production of CO₂ separation films. However, in the case of the CO₂ separation film being a thin film, if using a film-forming composition containing polydimethylsiloxane, which is a liquid polymer, there are problems in that unevenness tends to occur in the film formed due to the polydimethylsiloxane agglomerating, and thus being difficult to produce a CO₂ separation film having uniform film thickness. It should be noted that, not limiting to a CO₂ separation film, also for other films produced using a film-forming composition containing polydimethylsiloxane, there is similarly a problem in that unevenness tends to occur in the film surface formed, and thus being difficult to produce a film having uniform film thickness.

The present invention has been made taking account of the above-mentioned problem, and has an object of providing a film-forming composition containing polydimethylsiloxane, and capable of forming a film having uniform film thickness, a cured film of this film-forming composition, a production method for this cured film, a production method for a multilayer body made using the aforementioned production method for a cured film, and a CO₂ separation method using the multilayer body produced by this production method.

### Means for Solving the Problems

The present inventors have found that the above-mentioned problem can be solved by a film-forming composition containing polydimethylsiloxane, a curing agent, and at least one hydroxamic acid compound selected from hydroxamic acids and salts thereof, in which the content of hydroxamic acids is more than 0% by mass and less than 5% by mass relative to the mass of polydimethylsiloxane, thereby arriving at completion of the present invention. More specifically, the present invention provides the following.
(1) A film-forming composition includes:
   polydimethylsiloxane; a curing agent, and at least one hydroxamic acid compound selected from hydroxamic acids and salts thereof, in which a content of the hydroxamic acid compound is more than 0% by mass and less than 5% by mass relative to mass of the polydimethylsiloxane.
(2) In the film-forming composition as described in (1) above, a mass average molecular weight of the polydimethylsiloxane is 90000 or more.
(3) In the film-forming composition as described in (1) or (2) above, the film-forming composition is a CO₂ separation film-forming composition.
(4) A cured film consisting of a cured product of the film-forming composition as described in any one of (1) to (3) above, in which a content of the hydroxamic acid compound is more than 0% by mass and less than 5% by mass relative to mass of the cured film.
(5) In the cured film as described in (4) above, a surface roughness Ra is 10% or less of a film thickness of the cured film.
(6) In the cured film as described in (4) or (5) above, a film thickness is 10 nm or more and 2000 nm or less.
(7) The cured film as described in any one of (4) to (6) above is a CO₂ separation film.
(8) A production method for a cure film includes: a coating film forming step of forming a coating film of the film-forming composition as described any one of (1) to (3) above; and
   a curing step of curing the coating film to form a cured film, in which in the curing step, a content of the hydroxamic acid compound in the curing film is adjusted to more than 0% by mass and less than 5% by mass.
(9) In the production method for a cured film as described in (8) above, the cured film is a CO₂ separation film.
(10) In a production method for a multilayer body in which a CO₂ separation film and a support substrate are laminated, the method includes:
   a CO₂ separation film producing step of producing the CO₂ separation film by way of the production method for a cured film as described in (9) above.
(11) A CO₂ separation method includes a multilayer body producing step of producing a multilayer body by way of the production method for a multilayer body as described in (10) above; and
   a separation step of separating CO₂ from a gas containing CO₂ by supplying the gas to the multilayer body.

### Effects of the Invention

According to the present invention, it is possible to provide a film-forming composition containing polydimethylsiloxane, and capable of forming a film having uniform film thickness, a cured film of this film-forming composition, a production method for this cured film, a production method for a multilayer body made using the aforementioned production method for a cured film, and a CO₂ separation method using the multilayer body produced by this production method.

### BRIEF DESCRIPTION OF THE DRAWINGS

FIGs. 1A to 1F are schematic diagrams for explaining a production method for a multilayer body;
FIGs. 2A to 2C provide photographs showing observation results of Comparative Example 1;
FIGs. 3A to 3C provide photographs showing observation results of Comparative Example 2;
FIGs. 4A to 4C provide photographs showing observation results of Comparative Example 3;
FIGs. 5A to 5C provide photographs showing observation results of Example 1; and
FIG. 6 is a graph showing measurement results for film thickness and surface roughness Ra of Examples 2 to 4.

### PREFERRED MODE FOR CARRYING OUT THE INVENTION

### <<Film-forming Composition>>

A film-forming composition includes a polydimethylsiloxane, a curing agent, at least one hydroxamic acid compound selected from hydroxamic acids and salts thereof. In the film-forming composition, the content of the hydroxamic acid compound is more than 0% by mass and less than 5% by mass, relative to the mass of polydimethylsiloxane.

By using the aforementioned film-forming composition, as shown in the Examples described later, it is possible to form a film having a more uniform film thickness, than a case of using a film-forming composition in which a content of the hydroxamic acid compound outside the above-mentioned range. By using the aforementioned film-forming composition, although the reasons for being able to form a film having uniform film thickness are unclear, it is surmised to be for the following reason. When the film-forming composition contains a trace amount of a benzhydroxamic acid compound (more than 0% by mass and less than 5% by mass), upon forming the film (cured film), the polydimethylsiloxane in the film-forming composition becomes higher molecular weight. Agglomeration of the polydimethylsiloxane is thereby suppressed, and unevenness hardly occurs in the film formed (for example, becomes smooth film), and thus a film having uniform film thickness can be obtained. Since the film thickness is uniform, in the case of using the formed film as a separation film such as a CO₂ separation film, for example, it is possible to make the separation performance uniform over the entire separation film.

On the other hand, in the case of the film-forming composition not containing a trace amount (more than 0% by mass and less than 5% by mass) of a benzhydroxamic acid compound, the polydimethylsiloxane agglomerates, unevenness tends to occur in the formed film, and thus it is difficult to obtain a film having uniform film thickness.

In the case of the formed film being a thin film, if using a film-forming composition containing polydimethylsiloxane, which is a liquid polymer, by the polydimethylsiloxane agglomerating, unevenness tends to occur in the formed film, and thus it is difficult to manufacture a film having uniform film thickness. However, by using the aforementioned film-forming composition, even if a thin film (for example, 10 nm or more and 2000 nm or less), it is possible to make the film thickness uniform.

The content of hydroxamic acids in the film-forming composition may be more than 0% by mass and less than 5% by mass relative to the mass of polydimethylsiloxane; however, it is preferably 0.05% by mass or more and 4% by mass or less, and more preferably 1% by mass or more and 3% by mass or less. In other words, in the film-forming composition, (mass of hydroxamic acid compound) / (mass of polydimethylsiloxane) x 100 may be more than 0 and less than 5; however, it is preferably 0.05 or more and 4 or less, and more preferably 1 or more and 3 or less.

The hydroxamic acid compound contained by the film-forming composition are at least one type selected from hydroxamic acids and salts thereof. As the hydroxamic acid, benzhydroxamic acid (N-hydroxybenzamide), 1-naphthohydroxamic acid, and salicylhydroxamic acid can be exemplified. As the hydroxamic acid salts, sodium salts of hydroxamic acids such as sodium benzohydroxamate can be exemplified.

The polydimethylsiloxane contained by the film-forming composition may have a hydroxyl group at both terminal ends or one terminal end of the molecular chain. In addition, the polydimethylsiloxane contained by the film-forming composition may be an elastomer.

The mass average molecular weight Mw of the polydimethylsiloxane contained by the film-forming composition is preferably 90000 or more, more preferably 95000 or more, and even more preferably 100000 or more. In addition, the dispersity of the polydimethylsiloxane (weight average molecular weight Mw / number average molecular weight Mn) is preferably 1 or more and 20 or less, more preferably 3 or more and 15 or less, and even more preferably 5 or more and 10 or less. It should be noted that, in the present disclosure, the mass average molecular weight Mw, and number average molecular weight Mn can be defined as the relative value in terms of polystyrene in GPC (gel permeation chromatography) measurement. The content of polydimethylsiloxane in the film-forming composition is not particularly limited. In the film-forming composition, the content of polydimethylsiloxane is preferably 1% by mass or more and 20% by mass or less, more preferably 3% by mass or more and 18% by mass or less, and even more preferably 5% by mass or more and 15% by mass or less.

The curing agent contained by the film-forming composition is a curing agent that cures the polydimethylsiloxane. As the curing agent, for example, alkoxysilanes such as tetramethoxysilane, trimethoxymethylsilane, dimethoxydimethylsilane, methoxytrimethylsilane, and γ-glycidoxypropyltrimethoxysilane can be exemplified.

The content of the curing agent in the film-forming composition is not particularly limited. In the film-forming composition, the content of curing agent is preferably 0.1 parts by mass or more and 20 parts by mass or less, and more preferably 1 part by mass or more and 10 parts by mass or less, relative to 100 parts by mass of polydimethylsiloxane.

The film-forming composition may contain a solvent. The boiling point of the solvent is not particularly limited; however, it is preferably 70°C or higher and 300°C or lower, more preferably 80°C or higher and 250°C or lower, and even more preferably 90°C or higher and 200°C or lower.

As the solvent contained in the film-forming composition, for example, sulfoxides, sulfones, amides, lactams, imidazolidinones, dialkyl glycol ethers, (poly)alkylene glycol monoalkyl ethers, (poly)alkylene glycol monoalkyl ether acetates, other ethers, ketones, other esters, lactones, linear, branched, or cyclic aliphatic hydrocarbons, aromatic hydrocarbons, terpenes, and the like can be exemplified. As the sulfoxides, dimethylsulfoxide can be exemplified. As the sulfones, for example, dimethyl sulfone, diethyl sulfone, bis(2-hydroxyethyl) sulfone, and tetramethylene sulfone can be exemplified. As the amides, for example, N,N-dimethylformamide, N-methylformamide, N,N-dimethylacetamide, N-methylacetamide, and N,N-diethylacetamide can be exemplified. As the lactams, for example, N-methyl-2-pyrrolidone, N-ethyl-2-pyrrolidone, N-propyl-2-pyrrolidone, N-hydroxymethyl-2-pyrrolidone, and N-hydroxyethyl-2-pyrrolidone can be exemplified. As the imidazolidinones, for example, 1,3-dimethyl-2-imidazolidinone, 1,3-diethyl-2-imidazolidinone, and 1,3-diisopropyl-2-imidazolidinone can be exemplified. As the dialkyl glycol ethers, for example, dimethyl glycol, dimethyl diglycol, dimethyl triglycol, methyl ethyl diglycol, diethyl glycol, and triethylene glycol butyl methyl ether can be exemplified. As the (poly)alkylene glycol monoalkyl ethers, for example, ethylene glycol monomethyl ether, ethylene glycol monoethyl ether, ethylene glycol mono-n-propyl ether, ethylene glycol mono-n-butyl ether, diethylene glycol monomethyl ether, diethylene glycol monoethyl ether, diethylene glycol mono-n-propyl ether, diethylene glycol mono-n-butyl ether, triethylene glycol monomethyl ether, triethylene glycol monoethyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, tripropylene glycol monomethyl ether, and tripropylene glycol monoethyl ether can be exemplified. As the (poly)alkylene glycol monoalkyl ether acetates, for example, ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, propylene glycol monomethyl ether acetate, and propylene glycol monoethyl ether acetate can be exemplified. As the other ethers, for example, dimethyl ether, diethyl ether, methyl ethyl ether, dipropyl ether, diisopropyl ether, dibutyl ether, diisoamyl ether, diethylene glycol dimethyl ether, diethylene glycol methyl ethyl ether, diethylene glycol monobutyl ether, diethylene glycol diethyl ether, tetraethylene glycol dimethyl ether, and tetrahydrofuran can be exemplified. As the ketones, for example, methyl ethyl ketone, cyclohexanone, 2-heptanone, 3-heptanone, and 2,6-dimethyl-4-heptanone can be exemplified. As the other esters, for example, alkyl lactate esters such as methyl lactate and ethyl lactate; ethyl 2-hydroxy-2-methylpropionate, methyl 3-methoxypropionate, ethyl 3-methoxypropionate, methyl 3-ethoxypropionate, ethyl 3-ethoxypropionate, ethyl ethoxyacetate, ethyl hydroxyacetate, methyl 2-hydroxy-3-methylbutanoate, 3-methoxybutyl acetate, 3-methyl-3-methoxy-1-butyl acetate, 3-methyl-3-methoxybutylpropionate, ethyl acetate, n-propyl acetate, isopropyl acetate, n-butyl acetate, isobutyl acetate, n-pentyl acetate, n-hexyl acetate, n-heptyl acetate, n-octyl acetate, n-pentyl formate, isopentyl acetate, n-butyl propionate, ethyl butyrate, n-propyl butyrate, isopropyl butyrate, butyl butyrate, methyl n-octanoate, methyl decanoate, methyl pyruvate, ethyl pyruvate, n-propyl pyruvate, methyl acetoacetate, ethyl acetoacetate, ethyl 2-oxobutanoate, dimethyl adipate, and propylene glycol diacetate can be exemplified. As the lactones, for example, propyrolactone, γ-butyrolactone, and 6-pentyrolactone can be exemplified. As the linear, branched, or cyclic aliphatic hydrocarbons, for example, n-hexane, n-heptane, n-octane, n-nonane, methyloctane, n-decane, n-undecane, n-dodecane, 2,2,4,6,6-pentamethylheptane, 2,2,4,4,6,8,8-heptamethylnonane, cyclohexane, and methylcyclohexane can be exemplified. As the aromatic hydrocarbons, for example, benzene, toluene, benzotrifluoride, xylene, 1,3,5-trimethylbenzene, naphthalene, and decahydronaphthalene can be exemplified. As the terpenes, for example, p-menthane, diphenylmenthane, limonene, terpinene, bornane, norbornane, and pinane can be exemplified.

The method for preparing the film-forming composition is not particularly limited. The film-forming composition is typically prepared by uniformly mixing polydimethylsiloxane, a curing agent, a hydroxamic acid compound, solvent, and other components to be contained as necessary.

### <<Cured Film>>

The cured film consists of the cured product of the aforementioned film-forming composition. In the cured film, the content of the hydroxamic acid compound is more than 0% by mass and less than 5% by mass relative to the mass of cured film. Therefore, the cured film contains the cured product in which the polydimethylsiloxane cured by the curing agent, and the hydroxamic acid compound, in which the content of the hydroxamic acid compound is more than 0% by mass and less than 5% by mass relative to the mass of the cured film.

In such a cured film, the film thickness is more uniform than the cured film in which the content of the hydroxamic acid compound is outside the above-mentioned range, as shown in the Examples described later. For example, the surface roughness Ra of the cured film is 10% or less of the film thickness of the cured film. It should be noted that the surface roughness Ra is a value in accordance with JIS B 0601 (1994).

In the cured film, the content of the hydroxamic acid compound may be more than 0% by mass and less than 5% by mass relative to the mass of cured film, preferably 0.01% by mass or more and 4% by mass or less, and more preferably 1% by mass or more and 2% by mass or less.

The film thickness of the cured film is not limited. The cured film, for example, may be a thin film having a film thickness of 10 nm or more and 2000 nm or less. The film thickness of the cured film may be 1000 nm or less, 500 nm or less, or 200 nm or less.

The size of the cured film is not limited. The cured film, for example, may be a large film having an area of 0.03 m² or more (for example, 0.03 m² or more and 1000 m² or less).

Since the film thickness of the cured film is uniform, when using the cured film as a separation film such as a CO₂ separation film, for example, the separation film exhibits a uniform separation performance over the entire separation film.

### <<Production Method for Cured Film>>

The aforementioned cured film, for example, can be produced by a production method for a cured film including a coating film forming step of forming a coating film of the aforementioned film-forming composition, and a curing step of forming a cured film by curing the coating film. In the production method for a cured film, the content of the hydroxamic acid compound in the cured film in the curing step is adjusted to over 0% by mass and less than 5% by mass. Each step will be described below.

### (Coating Film Forming Step)

In the coating film forming step, a coating film of the aforementioned film-forming composition is formed. The method of forming the coating film is not particularly limited and, for example, a method of coating the aforementioned film-forming composition by a bar coating method, slit die coating method, gravure coating method, spin coating method, spray method, roller coating method, or immersion method can be exemplified. In the case of forming a large-scale film, a gravure coating method such as microgravure coating using a gravure roll is preferable.

### (Curing Step)

In the curing step, a cured film is formed by curing the coating film. In the curing step, the content of the hydroxamic acid compound in the cured film is adjusted so as to be more than 0% by mass and less than 5% by mass.

As the method of curing the coating film, heating the coating film can be exemplified. The heating (drying) temperature of the coating film, for example, is 50°C or higher and 160°C or lower, preferably 80°C or higher and 150°C or lower, and more preferably 110°C or higher and 140°C or lower. The heating (drying) time of the coating film, for example, is 5 minutes or more and 120 minutes or less, preferably 10 minutes or more and 60 minutes or less, and more preferably 15 minutes or more and 30 minutes or less.

Since the film-forming composition contains a hydroxamic acid compound, solvent, etc., the coating film also contains the hydroxamic acid compound, solvent, etc. Upon the curing step, the hydroxamic acid compound, solvent, etc. decompose, evaporate or the like, and the content percentage of the hydroxamic acid compound can change. On the other hand, the cured film formed by the aforementioned production method for a cured film has a content of the hydroxamic acid compound of more than 0% by mass and less than 5% by mass relative to the mass of the cured film. For this reason, in the curing step, the content of the hydroxamic acid compound in the cured film is adjusted so as to be more than 0% by mass and less than 5% by mass. The content of the hydroxamic acid compound in the cured film, for example, can be adjusted according to the heating temperature and heating time.

Since the cured film produced by such a production method has a uniform film thickness, if using as a separation such as a CO₂ separation film, for example, it is possible to make the separation performance uniform over the entire separation film.

### <<Production Method for Multilayer Body>>

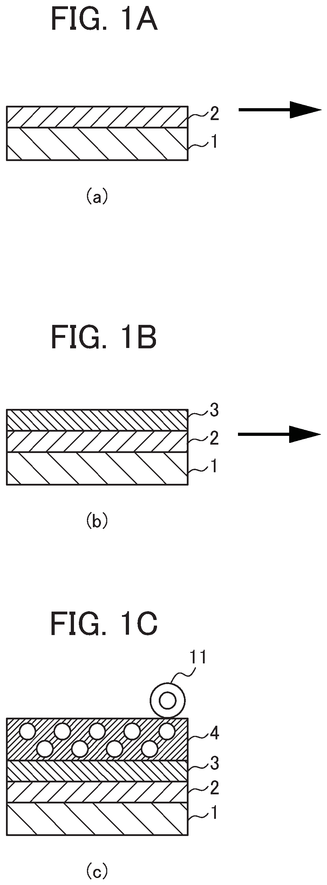

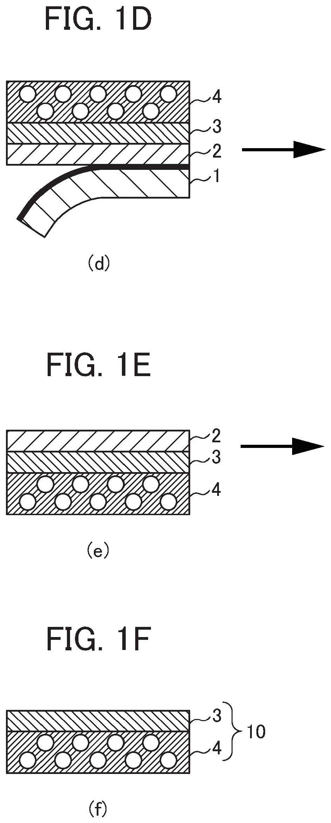

The production method for a multilayer body is a production method for multilayer bodies in which a CO₂ separation film and a support substrate are laminated. The production method for a multilayer body includes a CO₂ separation film producing step of producing a CO₂ separation film by the aforementioned production method for a cured film. The production method for a multilayer body, for example, in the case of the support substrate being a porous body, preferably includes:
a sacrificial layer-forming step of forming a sacrificial layer on a support using a sacrificial layer-forming composition;
a CO₂ separation film producing step of producing a CO₂ separation film on the sacrificial layer by the aforementioned production method for a cured film;
a bonding step of bonding the support substrate onto the CO₂ separation film;
a peeling step of peeling the support after the bonding step; and
a sacrificial layer removing step of removing the sacrificial layer by dissolving the sacrificial layer in a liquid, after the peeling step. Each step will be described below using FIG. 1. FIG. 1A to 1F are schematic diagrams for explaining the production method for a multilayer body.

### (Sacrificial Layer Forming Step)

In the sacrificial layer forming step, a sacrificial layer 2 is formed on a support 1 using a sacrificial layer-forming composition (FIG. 1A). The sacrificial layer-forming composition is not particularly limited so long as being a composition which can form a sacrificial layer that can be removed in a sacrificial layer removing step at a later stage. The sacrificial layer-forming composition typically contains a resin and solvent.

As the resin contained in the sacrificial layer-forming composition, polyvinyl alcohol resin, dextrin, gelatin, animal glue, casein, shellac, gum arabic, starch, protein, polyacrylic acid amide, sodium polyacrylate, polyvinyl methyl ether, copolymers of methyl vinyl ether and maleic anhydride, copolymers of vinyl acetate and itaconic acid, polyvinylpyrrolidone, acetyl cellulose, acetyl butyl cellulose, carboxymethyl cellulose, methyl cellulose, hydroxyethyl cellulose, and sodium alginate can be exemplified.

The amount of resin contained in the sacrificial layer-forming composition is not particularly limited in a range not hindering the object of the present invention, and is appropriately determined taking consideration of the coating property of the sacrificial layer-forming composition, etc. Typically, the amount of resin in the sacrificial layer-forming composition is preferably an amount whereby the relationship between the amount of resin in the sacrificial layer-forming composition and the amount of solvent described layer is the following relationship. In the case of setting the mass of resin in the sacrificial layer-forming composition as 100 parts by mass, the amount of solvent is preferably 100 parts by mass or more and 10000 parts by mass or less, more preferably 500 parts by mass or more and 8000 parts by mass or less, and particularly preferably 700 parts by mass or more and 6000 parts by mass or less.

The solvent contained in the sacrificial layer-forming composition is not particularly limited so long as being a solvent in which the resin is soluble. In the sacrificial layer-forming composition, if the resin dissolves in a predetermined amount, the sacrificial layer-forming composition may contain the resin in an undissolved state. The resin preferably completely dissolves in the sacrificial layer-forming composition.

The solvent may be water, may be an organic solvent, or may be an aqueous solution of organic solvent.

Specific examples of the organic solvent used as the solvent include:
monoalcohol solvents such as methanol, ethanol, n-propanol, isopropanol, n-butanol, isobutanol, sec-butanol, tert-butanol, n-pentanol, isopentanol, 2-methylbutanol, sec-pentanol, tert-pentanol, 3-methoxybutanol, 3-methyl-3-methoxybutanol, n-hexanol, 2-methylpentanol, sec-hexanol, 2-ethyl-1-butanol, sec-heptanol, 3-heptanol, 1-octanol, 2-ethylhexanol, sec-octanol, n-nonyl alcohol, 2,6-dimethyl-4-heptanol, n-decanol, sec-pentadecyl alcohol, trimethylnonyl alcohol, sec-tetradecyl alcohol, sec-heptadecyl alcohol, methyl isobutyl carbinol, phenol, cyclohexanol, methylcyclohexanol, 3,3,5-trimethylcyclohexanol, benzyl alcohol, phenylmethyl carbinol, diacetone alcohol, and cresol;
sulfoxides such as dimethyl sulfoxide;
sulfones such as dimethyl sulfone, diethyl sulfone, bis(2-hydroxyethyl) sulfone, and tetramethylene sulfone;
amides such as N,N-dimethylformamide, N-methylformamide, N,N-dimethylacetamide, N-methylacetamide, and N,N-diethylacetamide;
lactams such as N-methyl-2-pyrrolidone, N-ethyl-2-pyrrolidone, N-propyl-2-pyrrolidone, N-hydroxymethyl-2-pyrrolidone, and N-hydroxyethyl-2-pyrrolidone;
imidazolidinones such as 1,3-dimethyl-2-imidazolidinone, 1,3-diethyl-2-imidazolidinone, and 1,3-diisopropyl-2-imidazolidinone;
dialkyl glycol ethers such as dimethyl glycol, dimethyl diglycol, dimethyl triglycol, methyl ethyl diglycol, diethyl glycol, and triethylene glycol butyl methyl ether;
(poly)alkylene glycol monoalkyl ethers such as ethylene glycol monomethyl ether, ethylene glycol monoethyl ether, ethylene glycol mono-n-propyl ether, ethylene glycol mono-n-butyl ether, diethylene glycol monomethyl ether, diethylene glycol monoethyl ether, diethylene glycol mono-n-propyl ether, diethylene glycol mono-n-butyl ether, triethylene glycol monomethyl ether, triethylene glycol monoethyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, tripropylene glycol monomethyl ether, and tripropylene glycol monoethyl ether;
(poly)alkylene glycol monoalkyl ether acetates such as ethylene glycol monomethyl ether acetate, ethylene glycol monoethyl ether acetate, diethylene glycol monomethyl ether acetate, diethylene glycol monoethyl ether acetate, propylene glycol monomethyl ether acetate, and propylene glycol monoethyl ether acetate;
other ethers such as dimethyl ether, diethyl ether, methyl ethyl ether, dipropyl ether, diisopropyl ether, dibutyl ether, diisoamyl ether, diethylene glycol dimethyl ether, diethylene glycol methyl ethyl ether, diethylene glycol diethyl ether, and tetrahydrofuran;
ketones such as methyl ethyl ketone, cyclohexanone, 2-heptanone, and 3-heptanone;
alkyl lactate esters such as methyl 2-hydroxypropionate and ethyl 2-hydroxypropionate;
other esters such as ethyl 2-hydroxy-2-methylpropionate, methyl 3-methoxypropionate, ethyl 3-methoxypropionate, methyl 3-ethoxypropionate, ethyl 3-ethoxypropionate, ethyl ethoxyacetate, ethyl hydroxyacetate, methyl 2-hydroxy-3-methylbutanoate, 3-methyl-3-methoxybutyl acetate, 3-methyl-3-methoxybutyl propionate, ethyl acetate, n-propyl acetate, i-propyl acetate, n-butyl acetate, i-butyl acetate, n-pentyl formate, i-pentyl acetate, n-butyl propionate, ethyl butyrate, n-propyl butyrate, i-propyl butyrate, n-butyl butyrate, methyl pyruvate, ethyl pyruvate, n-propyl pyruvate, methyl acetoacetate, ethyl acetoacetate, and ethyl 2-oxobutanoate;
lactones such as β-propylolactone, γ-butyrolactone, and δ-pentyrolactone;
linear, branched, or cyclic aliphatic hydrocarbons such as n-hexane, n-heptane, n-octane, n-nonane, methyloctane, n-decane, n-undecane, n-dodecane, 2,2,4,6,6-pentamethylheptane, 2,2,4,4,6,8,8-heptamethylnonane, cyclohexane, and methylcyclohexane;
aromatic hydrocarbons such as benzene, toluene, xylene, 1,3,5-trimethylbenzene, and naphthalene; and
terpenes such as p-menthane, diphenylmenthane, limonene, terpinene, bornane, norbornane, and pinane.

In the case of the solvent being a mixed solvent of water and organic solvent, the content of the organic solvent in the solvent is preferably 10% by mass or more, and more preferably 20% by mass or more.

The sacrificial layer-forming composition may contain various components other than the resin and solvent in a range not hindering the object of the present invention. As the other components, for example, a viscosity adjusting agent, surfactant, anti-foaming agent, etc. can be exemplified.

The method for preparing the sacrificial layer-forming composition is not particularly limited. The sacrificial layer-forming composition is typically prepared by uniformly mixing predetermined amounts of each of the resin, solvent, and other components to be contained as necessary.

As the support 1 forming the sacrificial layer 2 using such a sacrificial layer-forming composition, a film made of a resin such as PET (polyethylene terephthalate) film, or substrates such as a silicon substrate or glass substrate can be exemplified. In the support 1, the surface on which the sacrificial layer 2 is formed may or may not be treated with a mold release agent. The shape of the support 1 is not particularly limited, and may be film form or plate form. In the case of the shape of the support being a film form, it is possible to use a film drawn out from a film roll as the support 1.

The method of forming the sacrificial layer 2 using the sacrificial layer-forming composition on the support 1 is not particularly limited, and a coating method such as a bar coating method, slit die coating method, gravure coating method, spin coating method, spray method, roller coating method, and dipping method can be exemplified.

After coating the sacrificial layer-forming composition on the support 1, at least part of the solvent in the sacrificial layer-forming composition may be removed by heating (drying) the coating film of the sacrificial layer-forming composition, as necessary. The heating temperature of the coating film of the sacrificial layer-forming composition, for example, is 50°C or higher and 90°C or lower. In addition, after heating at a low temperature (for example, 50°C or higher and lower than 70°C), the coated film may be heated at high temperature (for example, 70°C or higher and 90°C or lower).

Although the film thickness (thickness) of the sacrificial layer 2 is not particularly limited, it is preferably 1 µm or more and 20 µm or less, more preferably 3 µm or more and 18 µm or less, and even more preferably 5 µm or more and 15 µm or less.

### (CO₂ Separation Film Producing Step)

In the CO₂ separation film producing step, the CO₂ separation film 3 is formed on the sacrificial layer 2 by the aforementioned production method for a cured film (FIG. 1B).

### (Bonding Step)

In the bonding step, the support substrate 4 is bonded onto the CO₂ separation film 3 (FIG. 1C). In the case of the CO₂ separation film 3 being a thin and large film, for example, it is difficult to stand alone as the CO₂ separation film 3, and deformation and breakage tend to occur. By bonding the support substrate 4 for supporting (reinforcing) the CO₂ separation film 3 to the CO₂ separation film 3, it is possible to suppress deformation and breakage, and maintain the functions such as separation performance of the CO₂ separation film 3, for example.

Although the material of the support substrate 4 may be an organic material or an inorganic material, an organic material is preferred. Such organic materials are typically resins. As the resin, for example, polyacetal, polyamide, polycarbonate, polyesters (polybutylene terephthalate, polyethylene terephthalate, polyarylate, etc.), FR-AS resin, FR-ABS resin, AS resin, ABS resin, polyphenylene oxide, polyphenylene sulfide, polysulfone, polyethersulfone, polyetheretherketone, fluorine resins (polytetrafluoroethylene, polyvinylidene fluoride, etc.), polyimide, polyamideimide, polyamidebismaleimide, polyetherimide, polybenzoxazole, polybenzothiazole, polybenzimidazole, silicone resin, BT resin, polymethylpentene, ultra-high molecular weight polyethylene, FR-polypropylene, (meth)acrylic resins (polymethyl methacrylate), and polystyrenes can be exemplified. Among the resins, polyvinylidene fluoride, polyethersulfone, polyimide, and polyamideimide are preferred due to easily obtaining a thermally or chemically stable film superior in mechanical strength. As the material of the film, two or more types of resins may be mixed and used together. The support substrate 4 is preferably a porous body through which a gas can permeate. The shape of the support substrate 4 is not particularly limited, and may be a film form or plate form. In the case of the shape of the support substrate being film form, it is possible to use a film drawn out from a film roll as the support substrate 4.

The thickness of the support substrate 4 is not particularly limited; however, it is preferably 1 µm or more and 100 µm or less, more preferably 10 µm or more and 80 µm or less, and even more preferably 20 µm or more and 60 µm or less.

The method of bonding the support substrate 4 onto the CO₂ separation film 3 is not particularly limited. For example, lamination and transfer methods using intermolecular forces can be exemplified. For example, with a pressure of an order that the support substrate 4 is not damaged, the CO₂ separation film 3 may be laminated (thermocompression bonded) onto the support substrate 4 using the roll 11 or the like. Regarding the conditions of thermocompression bonding, the pressure of the roller is preferably 0.1 kgf/cm² or more and 10 kgf/cm² or less, and more preferably 0.2 kgf/cm² or more and 5 kgf/cm² or less. The temperature of the roller is preferably 20°C or higher and 120°C or lower, and more preferably 25°C or higher and 100°C or lower. In the case of using intermolecular forces, for example, it is sufficient so long as bringing the CO₂ separation film 3 and support substrate 4 into contact by the roller.

### (Peeling Step)

In the peeling step, the support 1 is peeled after the bonding step (FIG. 1D). The method of peeling the support 1 from the sacrificial layer 2 is not particularly limited. A method of peeling off the support 1 from the sacrificial layer 2 without using a stripping solution or the like can be exemplified. For example, in the case of the support 1 being film form, it is possible to peel the support 1 from the sacrificial layer 2 by unrolling the film. Upon peeling the support 1 from the sacrificial layer 2, a part of the sacrificial layer 2 may be peeled off together with the support 1.

### (Sacrificial Layer Removing Step)

In the sacrificial layer removing step, the sacrificial layer 2 is removed by dissolving the sacrificial layer 2 in a liquid after the peeling step (FIG. 1E). The multilayer body 10 in which the CO₂ separation film 3 and the support substrate 4 are laminated can thereby be produced (FIG. 1F). The multilayer body 10 may be dried by air blowing, a dryer or the like, as necessary.

The liquid dissolving the sacrificial layer 2 may be water, may be an organic solvent, or may be a mixed solvent of water and organic solvent. In the case of dissolving the sacrificial layer in these liquids, a part of the sacrificial layer may remain without dissolving in the liquid. In order to the remove the remaining sacrificial layer, it is preferable to further dissolve the sacrificial layer using an alkali aqueous solution (basic aqueous solution), for example.

The method of dissolving the sacrificial layer 2 in liquid is not particularly limited; however, a method washing the sacrificial layer 2 with running water, a method soaking the sacrificial layer 2 in a liquid, and a method spraying a liquid spewing from a shower onto the sacrificial layer 2 can be exemplified.

### <<CO₂ Separation Method>>

The CO₂ separation method includes: a multilayer body producing step of producing a multilayer body in which the CO₂ separation film and support substrate are laminated by the aforementioned production method for a multilayer body; and a separating step of separating CO₂ from a gas containing CO₂ by supplying the gas to the multilayer body. By separating and recovering CO₂ by such a CO₂ separation method, it is possible to suppress global warming from CO₂. In addition, the recovered CO₂ can be used as a carbon resource.

### EXAMPLES

Hereinafter, the present invention will be described in further detail by way of the Examples; however, the present invention is not to be limited to these Examples.

### [Example 1]

### <Preparation of Film-forming Composition>

The film-forming composition was prepared by dissolving 88.5 parts by mass of PDMS elastomer having a hydroxyl group at a terminal end (mass average molecular weight Mn = 106400, dispersity Mw/Mn = 6.29), 8.9 parts by mass of trimethoxymethylsilane, and 2.6 parts by mass of benzhydroxamic acid, so the PDMS elastomer concentration in the solvent becomes 5% by mass. It should be noted that, using heptane (boiling point 98°C), butyl acetate (boiling point 126°C), and decahydronaphthalene (boiling point 185°C) as the solvent, the respective film-forming compositions were prepared with each solvent.

### <Production of Cured Film (CO₂ Separation Film)>

First, 10 µL of a 10% by mass ethanol solution of polyvinyl alcohol as the sacrificial layer-forming composition was dropped onto the support (PET film). The sacrificial layer-forming composition dropped onto the support 1 was coated onto the support 1 by a bar coating method to form the sacrificial layer with a film thickness of 15 µm (sacrificial layer forming step).

Next, the film forming composition was coated in layer shape by a bar coating method onto the sacrificial layer, and heated by a hot plate for 20 minutes at 120°C to form a cured film (CO₂ separation film) having a film thickness of 1000 nm (film forming step).

### [Comparative Example 1]

The same operations as Example 1 were performed other than preparing the film-forming composition by the following method in place of the above-mentioned <Preparation of Film-forming Composition>. The film-forming composition was prepared by dissolving SYLGARD (registered trademark) 184 (polydimethylsiloxane manufactured by Dow Corning Corp. (mass average molecular weight Mn = 19500, dispersity Mw/Mn = 4.14), PDMS: curing agent = 10:1) in a solvent so that the PDMS concentration became 5% by mass. It should be noted that using heptane (boiling point 98°C), butyl acetate (boiling point 126°C), and decahydronaphthalene (boiling point 185°C) as the solvent, the respective film-forming compositions were prepared with each solvent.

### [Comparative Example 2]

The same operations as Example 1 were performed other than using 90 parts by mass of PDMS elastomer having a hydroxyl group at a terminal end (mass average molecular weight Mn = 52700, Mw/Mn = 2.82), and 10 parts by mass of trimethoxymethylsilane in place of 88.5 parts by mass of PDMS elastomer having a hydroxyl group at a terminal end (mass average molecular weight Mn = 106400, dispersity Mw/Mn = 6.29), 8.9 parts by mass of trimethoxymethylsilane, and 2.6 parts by mass of benzhydroxamic acid in the above <Preparation of Film-forming Composition>.

### [Comparative Example 3]

The same operations as Example 1 were performed other than using 90 parts by mass of PDMS elastomer having a hydroxyl group at a terminal end (mass average molecular weight Mn = 86900, Mw/Mn = 3.73), and 10 parts by mass of trimethoxymethylsilane in place of 88.5 parts by mass of PDMS elastomer having a hydroxyl group at a terminal end (mass average molecular weight Mn = 106400, dispersity Mw/Mn = 6.29), 8.9 parts by mass of trimethoxymethylsilane, and 2.6 parts by mass of benzhydroxamic acid in the above <Preparation of Film-forming Composition>.

### <Observation of Film Surface>

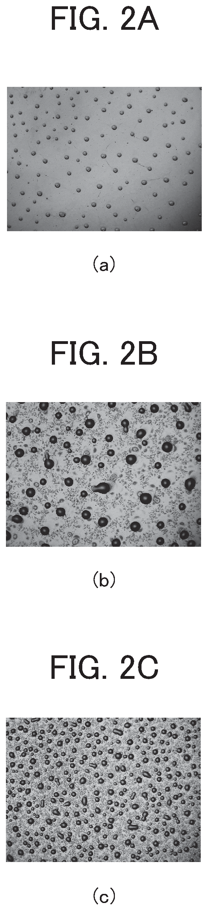

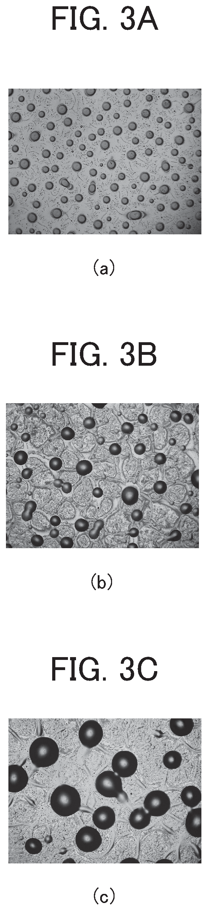

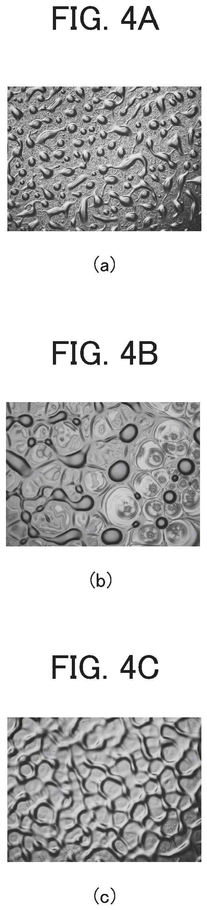

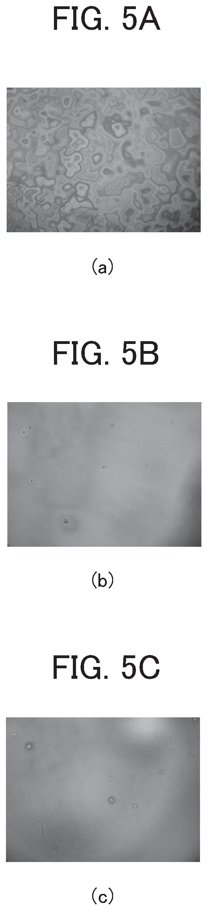

The surface of the obtained cured film was observed with a digital microscope. Photographs with 20 times magnification are shown in FIGs. 2A to 2C, FIGs. 3A to 3C, FIGs. 4A to 4C and FIGs. 5A to 5C. FIGs. 2A to 2C provide photographs showing the observation results of Comparative Example 1, FIGs. 3A to 3C provide photographs showing the observation results of Comparative Example 2, FIGs. 4A to 4C provide photographs showing the observation results of Comparative Example 3, and FIGs. 5A to 5C provide photographs showing the observation results of Example 1. FIG. 2A, FIG. 3A, FIG. 4A and FIG. 5A are the observation results when using the film-forming compositions in which the solvent is heptane. FIG. 2B, FIG. 3B, FIG. 4B and FIG. 5B are the observation results when using the film-forming compositions in which the solvent is butyl acetate. FIG. 2C, FIG. 3C, FIG. 4C and FIG. 5C are the observation results when using the film-forming compositions in which the solvent is decahydronaphthalene.

As shown in FIGs. 5 A to 5C, in Example 1 using the film-forming composition containing polydimethylsiloxane, curing agent and a hydroxamic acid compound, in which the content of the hydroxamic acid compound is more than 0% by mass and less than 5% by mass relative to the mass of polydimethylsiloxane, it was found that the PDMS did not agglomerate, unevenness was not observed in the film surface, variation in the film thickness was very small, and the film thickness was uniform. In contrast, as shown in FIGs. 2A to 2C, FIGs. 3A to 3C, and FIGs. 4A to 4C, in Comparative Examples 1 to 3 made using the film-forming composition not containing a hydroxamic acid compound, it was found that the PDMS agglomerated to make droplets, and the variation in film thickness was large compared to Example 1.

### <Measurement of Content of Benzhydroxamic Acid in Film>

For the obtained cured film, the content of benzhydroxamic acid was measured by liquid chromatography. As a result, the cured film of Example 1 had a content of benzhydroxamic acid of 1.8% by mass relative to the mass of cured film. On the other hand, the cured films of Comparative Examples 1 to 3 did not contain benzhydroxamic acid.

### [Examples 2 to 4]

On a silicon wafer, the film-forming composition prepared in <Preparation of Film-forming Composition> of Example 1 was coated in layer form by a spin coating method, and heated for 20 minutes at 120°C by a hot plate to form a cured film (CO₂ separation film) (film forming step). In Examples 2 to 4, the amount of film-forming composition coating onto the silicon wafers was changed so that the film thickness of each film obtained in Examples 2 to 4 were different.

### <Measurement of Film Thickness and Surface Roughness Ra>

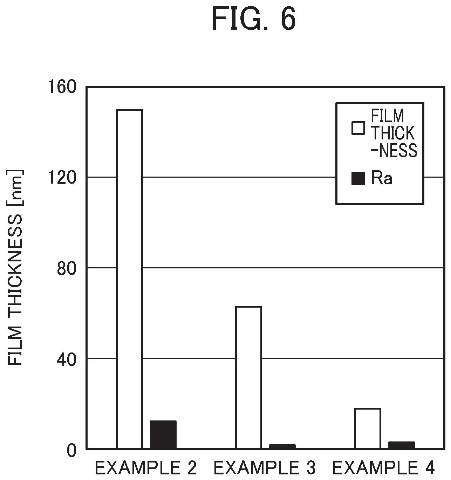

For the cured films obtained in Examples 2 to 4, the film thickness and surface roughness Ra were measured using a DektakXT-S (manufactured by Bruker). The measurement conditions set the measurement range of 6.5 µm, length of 30000 µm, time period of 60 seconds, and stylus pressure of 3 mg. The results are shown in FIG. 6.

As shown in FIG. 6, in Examples 2 to 4 made using the film-forming composition containing polydimethylsiloxane, curing agent and a hydroxamic acid compound, in which the content of the hydroxamic acid compound is more than 0% by mass and less than 5% by mass relative to the mass of polydimethylsiloxane, the surface roughness Ra of the produced cured film was 10% or less of the film thickness of cured film, they were found to be films of uniform film thickness.

### EXPLANATION OF REFERENCE NUMERALS

1 support
2 sacrificial layer
3 CO₂ separation film
4 support substrate
10 multilayer body
11 roll

## Claims

1. A film-forming composition comprising:
polydimethylsiloxane; a curing agent, and at least one hydroxamic acid compound selected from hydroxamic acids and salts thereof,
wherein a content of the hydroxamic acid compound is more than 0% by mass and less than 5% by mass relative to mass of the polydimethylsiloxane.

2. The film-forming composition according to claim 1, wherein a mass average molecular weight of the polydimethylsiloxane is 90000 or more.

3. The film-forming composition according to claim 1, wherein the film-forming composition is a CO₂ separation film-forming composition.

4. A cured film consisting of a cured product of the film-forming composition according to any one of claims 1 to 3,
wherein a content of the hydroxamic acid compound is more than 0% by mass and less than 5% by mass relative to mass of the cured film.

5. The cured film according to claim 4, wherein a surface roughness Ra is 10% or less of a film thickness of the cured film.

6. The cured film according to claim 4, wherein a film thickness is 10 nm or more and 2000 nm or less.

7. The cured film according to claim 4, wherein the cured film is a CO₂ separation film.

8. A production method for a cured film, comprising:
a coating film forming step of forming a coating film of the film-forming composition according to any one of claims 1 to 3; and
a curing step of curing the coating film to form a cured film,
wherein, in the curing step, a content of the hydroxamic acid compound in the curing film is adjusted to more than 0% by mass and less than 5% by mass.

9. The production method for a cured film according to claim 8, wherein the cured film is a CO₂ separation film.

10. A production method for a multilayer body in which a CO₂ separation film and a support substrate are laminated, the method comprising:
a CO₂ separation film producing step of producing the CO₂ separation film by way of the production method for a cured film according to claim 9.

11. A CO₂ separation method comprising:
a multilayer body producing step of producing a multilayer body by way of the production method for a multilayer body according to claim 10; and
a separation step of separating CO₂ from a gas comprising CO₂ by supplying the gas to the multilayer body.
